# FASCICULE DE BREVET EUROPEEN

(11) **EP 3 667 518 B1**
(45) Date de publication et mention de la délivrance du brevet: **22.05.2024**
(21) Numéro de dépôt: 19210578.1
(22) Date de dépôt: 21.11.2019
(51) Int. Cl.: G06F 16/44, G06F 16/957

(54) **NAVIGATION SPATIO-TEMPORELLE DE CONTENUS**
RAUM-ZEIT-NAVIGATION VON INHALTEN
SPACE-TIME NAVIGATION OF CONTENT

(30) Priorité: 14.12.2018 FR 1872971
(43) Date de publication de la demande: 17.06.2020
(73) Titulaire: Orange, 92130 Issy-les-Moulineaux (FR)
(72) Inventeur: BOUDIN, Fabrice, 92326 44 aveCHATILLON CEDEX (FR); HERLEDAN, Frédéric, 92326 CHATILLON CEDEX (FR)
(74) Mandataire: Cabinet Beau de Loménie

(56) Documents cités:
- WO-A2-2015/008162
- US-A1- 2007 133 518
- CARMICHAEL J ET AL: "Multimodal indexing of digital audio-visual documents: A case study for cultural heritage data", CONTENT-BASED MULTIMEDIA INDEXING, 2008. CBMI 2008. INTERNATIONAL WORKSHOP ON, IEEE, PISCATAWAY, NJ, USA, 18 juin 2008 (2008-06-18), pages 93-100, XP031286351, ISBN: 978-1-4244-2043-8
- MICHAEL JOHNSTON: "Building multimodal applications with EMMA", MULTIMODAL INTERFACES, ACM, 2 PENN PLAZA, SUITE 701 NEW YORK NY 10121-0701 USA, 2 novembre 2009 (2009-11-02), pages 47-54, XP058118392, DOI: 10.1145/1647314.1647325 ISBN: 978-1-60558-772-1

## Description

### Domaine technique

Aujourd'hui, les interfaces web offrent de manière systématique deux façons distinctes et cloisonnées de naviguer au sein d'un contenu, selon le type de ce dernier: s'il s'agit d'un contenu textuel (page html, blog, page wiki, pdf, etc.), la navigation se fait de façon spatiale (via une barre de défilement verticale par exemple) ; et s'il s'agit d'un contenu audio ou vidéo (ci-après appelé contenu média), la navigation se fait de façon temporelle (via une barre de progression temporelle horizontale).

Selon un autre aspect, le web a facilité depuis ses débuts la navigation d'un contenu à un autre (ainsi que la possibilité d'atteindre une cible au sein d'un même contenu) grâce au lien hypertexte, et à l'indexation de ces derniers au sein des moteurs de recherche. Dans le cas d'un contenu média, l'indexation se fait non pas sur le contenu mais sur ses métadonnées déclaratives (titre, description, mots-clés associés).

Les acteurs majeurs du web ou les solutions qui se sont succédées n'ont pas cherché à casser ce double paradigme (l'un sur la navigation intra-contenu, l'autre sur la navigation entre contenus). Ainsi, les habitudes d'usage des internautes n'ont pas été modifiées.

Cependant, les approches courantes pour la navigation de contenu, soit intra-contenu soit inter-contenus, présentent des limitations. Par exemple, la différence de navigation entre un contenu média et un contenu texte créé des ruptures dans l'expérience utilisateur, au sein de services combinant de plus en plus les types contenus (image, vidéo, texte, etc.). De plus, la navigation spatiale dans un contenu textuel peut s'avérer fastidieuse lorsque le contenu est très long, surtout sur les appareils à la taille d'écran réduite.

Le document Carmichael J et Al intitule "Multimodal indexing of digital audio-visual documents: A case study for cultural héritage data", CBMI 2008, ISBN 978-1-4244-2043-8, pages 93 - 100, XP031286351, décrit un procédé d'indexation de contenu media permettant d'indexer, à partir de métadonnées, du texte dans un contenu média à des fins de recherche de mots-clés dans un contenu média.

### Résumé de l'invention

La présente invention permet notamment de pallier les inconvénients précités en proposant un procédé pour permettre une navigation spatio-temporelle de contenu tel que proposé dans la revendication 1

Dans un mode de réalisation, l'élément graphique permet à l'utilisateur de sélectionner entre un mode de vue texte et un mode de vue média du contenu.

Ainsi, la présente invention permet de traiter une demande de contenu de tout type (texte ou média) afin de répondre avec les éléments nécessaires à permettre une navigation spatio-temporelle du contenu demandé, à savoir les éléments nécessaires pour rendre possible une navigation du contenu en mode de vue texte et/ou en mode de vue média. Cela permet la même expérience utilisateur quel que soit le type de contenu. Plus précisément, un contenu textuel (e.g., page html) peut avoir une navigation spatiale (via une barre de défilement verticale) mais aussi une navigation temporelle (via une barre de progression horizontale) grâce au fichier audio généré à partir du contenu. Et un contenu média (audio/vidéo) peut avoir une navigation temporelle (via une barre de progression horizontale) mais aussi une navigation spatiale via une barre de défilement verticale grâce au texte généré à partir du contenu.

Dans un mode de réalisation du procédé selon l'invention, dans lequel l'élément graphique permet à l'utilisateur de sélectionner entre un mode de vue texte et un mode de vue média du contenu, le script est configuré pour :
en réponse à une sélection du mode de vue texte par l'élément graphique,
si le premier contenu comprend le contenu média, déclencher un affichage du texte généré et d'une barre de progression de la piste audio, le texte généré et la barre de progression de la piste audio étant synchronisés à l'aide des premières métadonnées de synchronisation; et
si le premier contenu comprend le contenu textuel, déclencher un affichage du contenu textuel et d'une barre de progression du fichier audio, le contenu textuel et la barre de progression du fichier audio étant synchronisés à l'aide des deuxièmes métadonnées de synchronisation.

En conséquence, un contenu, de tout type, peut être affiché en deux représentations, une représentation textuelle et une représentation audio. L'utilisateur peut naviguer dans le contenu en utilisant l'un ou l'autre des représentations (ou les deux ensemble) à sa guise. La représentation texte d'un contenu média permet à l'utilisateur de rechercher, copier ou transcrire le contenu média. La représentation audio d'un contenu texte fournit un moyen supplémentaire de traiter le contenu, ce qui peut s'avérer plus facile que la lecture du contenu, en particulier lorsque le contenu est trop long, surtout sur les appareils à la taille d'écran réduite.

Dans le même ou un autre mode de réalisation du procédé selon l'invention, dans lequel l'élément graphique permet à l'utilisateur de sélectionner entre un mode de vue texte et un mode de vue média du contenu, le script est configuré pour:
en réponse à une sélection du mode de vue média par l'élément graphique,
si le premier contenu comprend le contenu textuel, déclencher un affichage d'une barre de progression du fichier audio; et
si le premier contenu comprend le contenu média, déclencher un affichage d'une barre de progression du contenu média et d'au moins une image du contenu média.

Dans un mode particulier de réalisation du procédé selon l'invention, quand le mode de vue texte est sélectionné et si le premier contenu comprend le contenu média, le script est configuré pour:
en réponse à un défilement du texte généré, déclencher un déplacement synchrone d'un indicateur de position de lecture courante de la barre de progression de la piste audio en fonction des premières métadonnées de synchronisation; et
en réponse à un mouvement de l'indicateur de position de lecture courante de la barre de progression de la piste audio, déclencher un défilement synchrone du texte généré en fonction des premières métadonnées de synchronisation.

La synchronisation de la représentation textuelle et de la représentation audio d'un contenu média permet à l'utilisateur d'utiliser facilement les deux représentations simultanément, de manière à lire dans la représentation textuelle le texte correspondant à un contenu entendu dans la représentation audio, ou inversement, pour écouter dans la représentation audio le dialogue correspondant à un texte lu dans la représentation textuelle.

Dans un autre mode de réalisation du procédé selon l'invention, le déplacement synchrone de l'indicateur de position de lecture courante de la barre de progression de la piste audio ne se déclenche que lorsqu'au moins un mot du texte généré est sélectionné par l'utilisateur. Dans ce même ou un autre mode de réalisation du procédé, le défilement synchrone du texte généré ne se déclenche que lorsque l'utilisateur appuie sur un bouton de lecture de la barre de progression de la piste audio.

Selon ce mode, la représentation textuelle et la représentation audio d'un contenu média sont découplées et ne sont liés que selon le choix de l'utilisateur. Cela permet à l'utilisateur, par exemple, de rembobiner ou d'avancer la représentation audio sans quitter la position de lecture courante dans la représentation textuelle. Inversement, l'utilisateur peut faire défiler la représentation textuelle sans quitter la position de lecture courante de la représentation audio.

Dans un mode de réalisation du procédé selon l'invention, quand le mode de vue texte est sélectionné et si le premier contenu comprend le contenu textuel, le script est configuré pour:
en réponse à un défilement du contenu textuel, déclencher un déplacement synchrone d'un indicateur de position de lecture courante de la barre de progression du fichier audio en fonction des deuxièmes métadonnées de synchronisation; et
en réponse à un mouvement de l'indicateur de position courante de la barre de progression du fichier audio, déclencher un défilement synchrone du contenu textuel en fonction des deuxièmes métadonnées de synchronisation.

La synchronisation de la représentation textuelle et de la représentation audio d'un contenu texte permet à l'utilisateur d'utiliser facilement les deux représentations simultanément, de manière à lire dans la représentation textuelle le texte correspondant à un contenu entendu dans la représentation audio, ou inversement, pour écouter dans la représentation audio le dialogue correspondant à un texte lu dans la représentation textuelle.

Dans un autre mode de réalisation du procédé selon l'invention, le déplacement synchrone de l'indicateur de position de lecture courante de la barre de progression du fichier audio ne se déclenche que lorsqu'au moins un mot du contenu textuel est sélectionné par l'utilisateur. Dans ce même ou un autre mode de réalisation du procédé, le défilement synchrone du contenu textuel ne se déclenche que lorsque l'utilisateur appuie sur un bouton de lecture de la barre de progression du fichier audio.

Selon ce mode, la représentation textuelle et la représentation audio d'un contenu texte sont découplées et ne sont liés que selon le choix de l'utilisateur. Cela permet à l'utilisateur, par exemple, de rembobiner ou d'avancer la représentation audio sans quitter la position de lecture courante dans la représentation textuelle. Inversement, l'utilisateur peut faire défiler la représentation textuelle sans quitter la position de lecture courante de la représentation audio.

Dans un mode particulier de réalisation du procédé selon l'invention, le procédé comprend:
si le premier contenu comprend un contenu média,
   une extraction de la piste audio du contenu média;
   une génération, à partir de la piste audio, dudit texte et des premières métadonnées de synchronisation; et
   un stockage dudit texte et des premières métadonnées de synchronisation; et
si le premier contenu comprend un contenu textuel,
   une génération, à partir du contenu textuel, du fichier audio et des deuxièmes métadonnées de synchronisation; et
   un stockage du fichier audio et des deuxièmes métadonnées de synchronisation.

Ainsi, les éléments nécessaires à une navigation spatio-temporelle de contenu sont générés et stockés pour être fournis à un client sur demande. Ces éléments sont les mêmes (représentations texte et audio et données de synchronisation) pour tout type de contenu.

Dans un mode particulier de réalisation du procédé selon l'invention, la génération dudit texte à partir de la piste audio comprend un lancement d'un traitement ASR (« Automatic Speech Recognition ») sur la piste audio.

Dans un mode particulier de réalisation du procédé selon l'invention, la génération du fichier audio à partir du contenu textuel comprend un lancement d'un traitement TTS (« Text To Speech ») sur le contenu texte.

Dans un mode particulier de réalisation du procédé selon l'invention, le procédé comprend:
une identification des locuteurs dont les voix sont enregistrées dans la piste audio ou le fichier audio; et
une génération d'un index desdits locuteurs identifiés.

Dans un mode particulier de réalisation du procédé selon l'invention, le procédé comprend:
une extraction d'un texte du contenu textuel; et
une génération du fichier audio et des deuxièmes métadonnées de synchronisation en fonction du texte extrait.

Ce mode est avantageux dans le cas d'un contenu textuel de format pdf par exemple ou d'un contenu comprenant du texte non convenable au traitement TTS (e.g., des métadonnées).

Dans un mode particulier de réalisation du procédé selon l'invention, le procédé comprend:
un découpage du contenu textuel en plusieurs parties de texte;
une génération de fichiers audio partiels, un fichier audio partiel étant généré à partir d'une partie de texte du contenu textuel; et
une fusion de l'ensemble des fichiers audio partiels générés à partir de l'ensemble des parties de texte du contenu textuel pour générer ledit fichier audio.

Ce mode est utile lorsque le service TTS a une limite sur la taille du texte qu'il peut traiter ou lorsque le contenu textuel lui-même ne peut pas être traité comme un texte unique.

Dans un mode particulier de réalisation du procédé selon l'invention, le procédé comprend:
une segmentation lexicale du texte généré ou du contenu textuel pour déterminer un ou
plusieurs éléments parmi : un index de segments thématiques, un index de mots-clés et un index des entités nommées.

Cela permet une navigation encore plus enrichie dans un contenu, en particulier dans le d'un contenu média.

Corrélativement, l'invention concerne également un dispositif permettant une navigation spatio-temporelle de contenu selon la revendication 10,

Dans un mode particulier de réalisation du système, le dispositif comprend un serveur tel qu'un serveur web par exemple.

Dans un mode de réalisation, l'élément graphique permet à l'utilisateur de sélectionner entre un mode de vue texte et un mode de vue média du contenu.

Dans un mode particulier de réalisation du dispositif, dans lequel l'élément graphique permet à l'utilisateur de sélectionner entre un mode de vue texte et un mode de vue média du contenu, le script est configuré pour :
en réponse à une sélection du mode de vue texte par l'élément graphique,
si le premier contenu comprend le contenu média, déclencher un affichage du texte généré et d'une barre de progression de la piste audio, le texte généré et la barre de progression de la piste audio étant synchronisés à l'aide des premières métadonnées de synchronisation; et
si le premier contenu comprend le contenu textuel, déclencher un affichage du contenu textuel et d'une barre de progression du fichier audio, le contenu textuel et la barre de progression du fichier audio étant synchronisés à l'aide des deuxièmes métadonnées de synchronisation.

Dans le même ou un autre mode de réalisation du dispositif selon l'invention, dans lequel l'élément graphique permet à l'utilisateur de sélectionner entre un mode de vue texte et un mode de vue média du contenu, le script est configuré pour:
en réponse à une sélection du mode de vue média par l'élément graphique,
si le premier contenu comprend le contenu textuel, déclencher un affichage d'une barre de progression du fichier audio; et
si le premier contenu comprend le contenu média, déclencher un affichage d'une barre de progression du contenu média et d'au moins une image du contenu média.

Dans un mode particulier de réalisation du dispositif selon l'invention, quand le mode de vue texte est sélectionné et si le premier contenu comprend le contenu média, le script est configuré pour:
en réponse à un défilement du texte généré, déclencher un déplacement synchrone d'un indicateur de position de lecture courante de la barre de progression de la piste audio en fonction des premières métadonnées de synchronisation; et
en réponse à un mouvement de l'indicateur de position de lecture courante de la barre de progression de la piste audio, déclencher un défilement synchrone du texte généré en fonction des premières métadonnées de synchronisation.

Dans un autre mode de réalisation du dispositif selon l'invention, le déplacement synchrone de l'indicateur de position de lecture courante de la barre de progression de la piste audio ne se déclenche que lorsqu'au moins un mot du texte généré est sélectionné par l'utilisateur. Dans ce même ou un autre mode de réalisation du procédé, le défilement synchrone du texte généré ne se déclenche que lorsque l'utilisateur appuie sur un bouton de lecture de la barre de progression de la piste audio.

Dans un mode de réalisation du dispositif selon l'invention, quand le mode de vue texte est sélectionné et si le premier contenu comprend le contenu textuel, le script est configuré pour:
en réponse à un défilement du contenu textuel, déclencher un déplacement synchrone d'un indicateur de position de lecture courante de la barre de progression du fichier audio en fonction des deuxièmes métadonnées de synchronisation; et
en réponse à un mouvement de l'indicateur de position courante de la barre de progression du fichier audio, déclencher un défilement synchrone du contenu textuel en fonction des deuxièmes métadonnées de synchronisation.

Dans un autre mode de réalisation du dispositif selon l'invention, le déplacement synchrone de l'indicateur de position de lecture courante de la barre de progression du fichier audio ne se déclenche que lorsqu'au moins un mot du contenu textuel est sélectionné par l'utilisateur. Dans ce même ou un autre mode de réalisation du procédé, le défilement synchrone du contenu textuel ne se déclenche que lorsque l'utilisateur appuie sur un bouton de lecture de la barre de progression du fichier audio.

Dans un mode particulier de réalisation du dispositif selon l'invention, le dispositif peut comprendre au moins un parmi:
un troisième module configuré pour extraire la piste audio du contenu média du contenu;
un quatrième module configuré pour générer, à partir de la piste audio, ledit texte et les premières métadonnées de synchronisation;
un cinquième module configuré pour générer, à partir du contenu textuel du contenu, ledit fichier audio et les deuxièmes métadonnées de synchronisation; et
un sixième module configuré pour stocker ledit texte et les premières métadonnées de synchronisation, ainsi que ledit fichier audio et les deuxièmes métadonnées de synchronisation.

Dans un mode particulier de réalisation du dispositif selon l'invention, le dispositif comprend un module configuré pour identifier les locuteurs dont les voix sont enregistrées dans la piste audio (et/ou le fichier audio) et pour générer un index desdits locuteurs identifiés.

Dans un mode particulier de réalisation du dispositif selon l'invention, le cinquième module comprend un module configuré pour extraire un texte du contenu textuel et pour générer ledit fichier audio et les deuxièmes métadonnées de synchronisation en fonction du texte extrait.

Dans un mode particulier de réalisation du dispositif selon l'invention, le cinquième module comprend:
un module configuré pour découper le contenu textuel en plusieurs parties de texte;
un module configuré pour générer des fichiers audio partiels, un fichier audio partiel étant généré à partir d'une partie de texte du contenu textuel; et
un module configuré pour fusionner l'ensemble des fichiers audio partiels générés à partir de l'ensemble des parties de texte du contenu textuel pour générer ledit fichier audio.

Dans un mode particulier de réalisation du dispositif selon l'invention, le dispositif comprend un septième module configuré pour récupérer le contenu d'au moins un fournisseur de contenu (textuel et/ou média).

Dans un mode particulier de réalisation du dispositif selon l'invention, le dispositif comprend un ou plusieurs modules configuré(s) pour effectuer une segmentation lexicale du texte généré ou du contenu textuel pour déterminer un ou plusieurs éléments parmi : un index de segments thématiques, un index de mots-clés et un index des entités nommées.

Dans un mode particulier de réalisation, les différentes étapes du procédé selon l'invention sont déterminées par des instructions de programmes d'ordinateurs.

En conséquence, l'invention vise aussi un programme d'ordinateur sur un support d'informations, ce programme étant susceptible d'être mis en oeuvre dans un serveur ou plus généralement dans un ordinateur, ce programme comportant des instructions adaptées à la mise en oeuvre des étapes d'un procédé tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations ou d'enregistrement lisible par un ordinateur, et comportant des instructions d'un programme d'ordinateur tel que mentionné ci-dessus.

Le support d'informations ou d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy dise) ou un disque dur. Alternativement, le support d'informations ou d'enregistrement peut être un circuit intégré dans lequel le programme est incorporé, le circuit étant adapté pour exécuter ou pour être utilisé dans l'exécution du procédé en question.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
[Fig.1] la figure 1 représente un système dans lequel l'invention peut être réalisée ;
[Fig. 2] la figure 2 représente schématiquement l'architecture matérielle d'un dispositif du système de la figure 1, dans un mode particulier de réalisation ;
[Fig. 3] la figure 3 illustre un exemple de mode de réalisation de l'invention ;
[Fig. 4] la figure 4 illustre le traitement d'un contenu textuel dans le mode de réalisation représenté dans la figure 3 ;
[Fig. 5] la figure 5 illustre le traitement d'un contenu média dans le mode de réalisation représenté dans la figure 3 ;
[Fig. 6] la figure 6 illustre un procédé de traitement de contenus selon un mode particulier de réalisation de l'invention ;
[Fig. 7] la figure 7 illustre l'affichage d'un contenu en mode de vue texte et en mode de vue média selon un mode particulier de réalisation de l'invention ;
[Fig. 8] la figure 8 illustre l'affichage d'un contenu en mode de vue média et vue texte simultanées dans lequel les deux vues sont affichées l'une à côté de l'autre ; et
[Fig. 9] la figure 9 illustre l'affichage d'un contenu en mode de vue média et vue texte simultanées dans lequel la vue texte est superposée à la vue média avec un effet de transparence.

### Description détaillée de l'invention

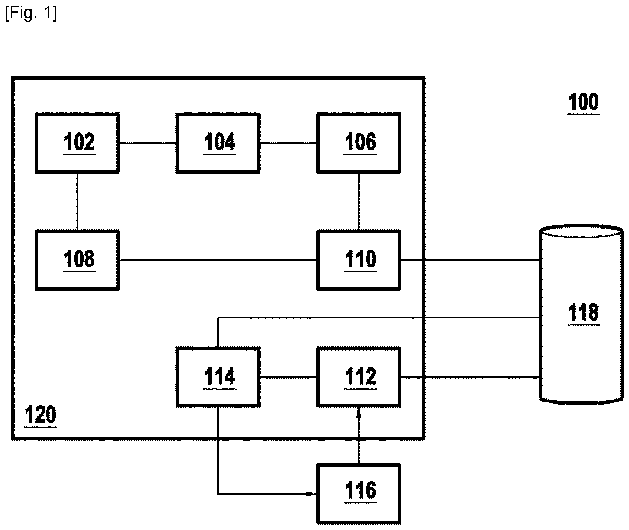

La **figure 1** représente un système 100 dans lequel l'invention peut être réalisée.

Dans l'exemple envisagé à la figure 1, le système 100 comprend un client 116, un dispositif 120 conforme à l'invention, et une base de données 118.

Le client 116 est apte à afficher des contenus textuels ou médias. Notamment, dans un mode particulier de réalisation du système, le client 116 comprend une interface utilisateur (e.g., un navigateur) utilisable pour envoyer une demande de contenu au dispositif 120 et pour afficher le contenu demandé lors de sa réception. Plus spécifiquement, comme décrit plus en détail ci-dessous, l'interface utilisateur est capable, à l'aide d'éléments fournis par le dispositif 120, d'afficher un contenu soit selon un mode de vue texte soit selon un mode de vue média. En tant que tel, une navigation spatio-temporelle de contenu est réalisée quel que soit le type de contenu.

Dans un mode particulier de réalisation du système, le dispositif 120 comprend au moins un serveur tel qu'un serveur web par exemple. La base de données 118 peut être intégrée ou externe au dispositif 120.

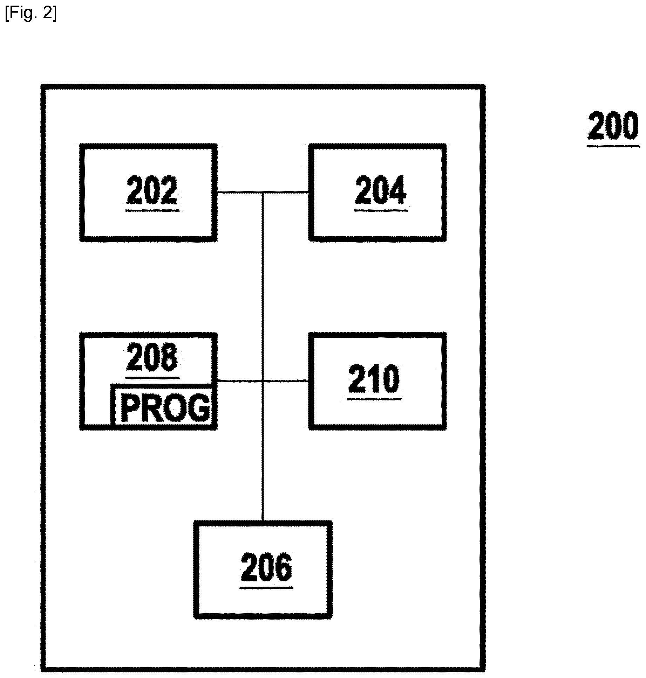

Dans un mode de réalisation, le dispositif 120 a l'architecture matérielle d'un ordinateur 200 telle qu'illustrée à la **figure 2****.** Il comprend notamment un processeur 202, une mémoire vive (RAM) 204, une mémoire morte (ROM) 208, une mémoire flash non volatile (NVRAM) 210, ainsi que des moyens de communication 206 comprenant une ou plusieurs interfaces de communication.

Les moyens de communication 206 permettent notamment au dispositif 120 de communiquer avec le client 116 notamment pour recevoir du client 116 la demande de contenu et pour transmettre au client 116 le contenu et les éléments d'affichage nécessaires pour une navigation spatio-temporelle du contenu dans l'interface utilisateur du client 116. Les moyens de communication 206 permettent en outre au dispositif 120 de communiquer avec la base de données 118 pour récupérer le contenu et/ou les éléments d'affichage de la base de données 118 afin de les transmettre au client 116.

La mémoire morte 208 constitue un support d'enregistrement conforme à l'invention, lisible par le processeur 202 et sur lequel est enregistré un programme d'ordinateur PROG conforme à l'invention : le programme PROG comporte des instructions pour l'exécution des étapes d'un procédé pour permettre une navigation spatio-temporelle de contenu selon l'invention. Dans un autre mode de réalisation, le programme PROG peut être enregistré sur la mémoire NVRAM 210 ou dans un support magnétique (non illustré à la figure 2) du dispositif 120.

Plus particulièrement, le programme PROG définit des modules fonctionnels du dispositif 120, qui sont configurés pour mettre en oeuvre les étapes du procédé selon l'invention. Les modules fonctionnels définis par le programme PROG s'appuient sur et/ou commandent les éléments matériels 202 à 210 de l'ordinateur 200 cités précédemment, et comprennent notamment ici, comme illustré sur la figure 1 :
- un premier module 112 configuré pour recevoir une demande de contenu d'un client, le contenu comprenant un contenu textuel ou un contenu média;
- un deuxième module 114 configuré pour transmettre au client le contenu et les éléments d'affichage nécessaires pour une navigation spatio-temporelle du contenu dans une interface utilisateur du client ;
- un troisième module 104 configuré pour extraire une piste audio d'un contenu média du contenu;
- un quatrième module 106 configuré pour générer, à partir de la piste audio, un texte et de premières métadonnées de synchronisation associant chaque mot du texte généré à un marqueur temporel dans la piste audio ;
- un cinquième module 108 configuré pour générer, à partir d'un contenu textuel du contenu, un fichier audio et de deuxièmes métadonnées de synchronisation associant chaque mot du contenu textuel à un marqueur temporel dans le fichier audio généré ;
- un sixième module 110 configuré pour stocker dans une ou plusieurs base(s) de données le texte généré et les premières métadonnées de synchronisation, ainsi que le fichier audio et les deuxièmes métadonnées de synchronisation ; et
- un septième module 102 configuré pour récupérer le contenu d'au moins un fournisseur de contenu (textuel et/ou média).

Dans un mode de réalisation, la navigation spatio-temporelle de la présente invention est rendue possible par un traitement de contenu pour générer des éléments nécessaires à la navigation spatio-temporelle. Ce traitement peut être effectué de manière proactive, c'est-à-dire avant que le contenu ne soit demandé, ou en temps réel en réponse à une demande du contenu émanant du client.

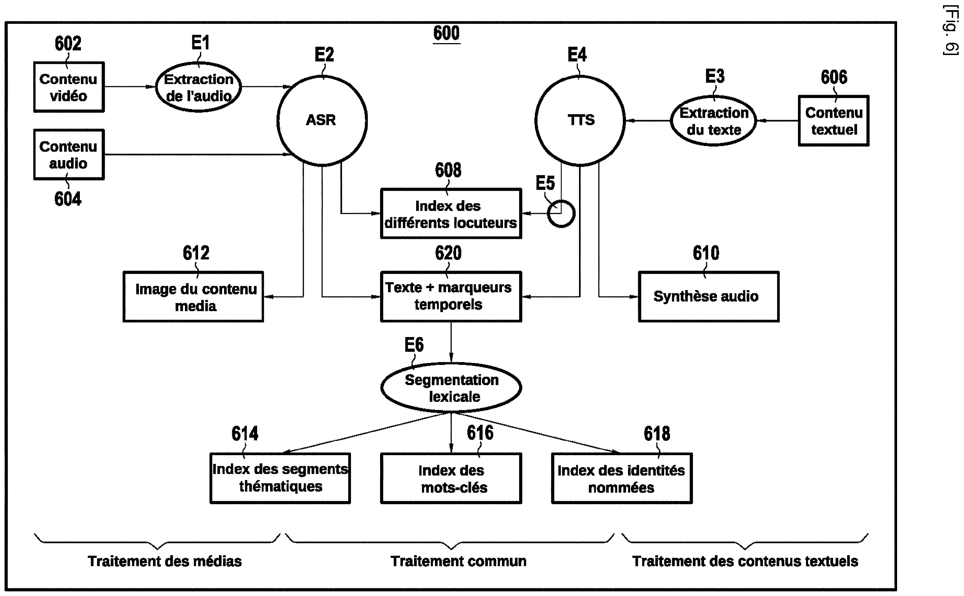

Dans un mode de réalisation, le traitement du contenu est effectué conformément au procédé représenté sur la **figure 6** et décrit ci-dessous. Ainsi, le traitement commence par la récupération de contenu auprès d'un ou de plusieurs fournisseurs de contenu. Le contenu peut inclure un contenu média (contenu vidéo 602 ou contenu audio 604) et/ou un contenu textuel 606. Dans un mode particulier de réalisation, la récupération du contenu est effectuée par le module 102 du dispositif 120 décrit ci-dessus.

Si le contenu comprend un contenu média (i.e., contenu vidéo 602 ou audio 604), le traitement comprend, dans une étape E1, une extraction d'une piste audio du contenu média. Dans un mode de réalisation, l'extraction de la piste audio du contenu média s'effectue uniquement dans le cas où le contenu inclut un contenu vidéo, un contenu audio servant directement tel quel comme piste audio. Dans un mode particulier de réalisation, l'extraction de la piste audio est effectuée par le module 104 du dispositif 120 décrit ci-dessus.

Ensuite, dans une étape E2, le traitement du contenu média comprend une génération, à partir de la piste audio, d'un texte et de premières métadonnées de synchronisation associant chaque mot du texte généré à un marqueur temporel dans la piste audio. Dans un mode particulier de réalisation, l'étape E2 est effectuée par le module 106 du dispositif 120 décrit ci-dessus.

Le **Tableau 1** ci-dessous illustre des métadonnées de synchronisation selon un mode de réalisation de la présente invention. Dans un mode particulier de réalisation, les premières métadonnées de synchronisation générées dans l'étape E2 peuvent être dans le même format que celui indiqué dans le tableau 1. Comme le montre le tableau 1, les métadonnées de synchronisation peuvent inclure un ou plusieurs identifiants identifiant le contenu auquel les métadonnées sont associées. De plus, les métadonnées associent chaque mot du texte à au moins un marqueur temporel de l'audio. Plus précisément, chaque mot du texte est associé à un marqueur temporel de début et à un marqueur temporel de fin qui identifient l'emplacement temporel du mot dans la piste audio.

### [TABLE 1]

**Tableau 1 - Exemple de métadonnées de synchronisation**

| |
|---|
| ```
 {
      "header":{
      "type":"maSegBreath",
      "corpusId":"ID du corpus",
      "collectionId":"ID de la collection",
      "documentId":"ID du document"
     },
     "segmentList":
     [
      {
        "startTimeSec":7.76,
        "endTimeSec": 15.88,
        "value":"Bonjour à tous. Nous allons vous présenter nos
   travaux en trois parties."
      },
      { "startTimeSec":17.26,
        "endTimeSec".22.88,
        "value":"La première sera consacrée à la description du
   premier concept que nous avons abordé."
      },
      {
        "startTimeSec":26.56,
        "endTimeSec":30.14,
        "value":"Enfin, pour ceux qui étaient présent la semaine
   précédente"
      }
  ]
 }
``` |

Dans un mode particulier de réalisation, le contenu média est fourni avec un texte associé et des métadonnées de synchronisation par le fournisseur de contenu. Ainsi, le traitement à l'étape E2 peut être omis.

Dans un mode particulier de réalisation selon l'invention, la génération du texte à partir de la piste audio comprend un lancement d'un traitement ASR (« Automatic Speech Recognition ») sur la piste audio. Le traitement ASR reconnait les mots et leur placement temporel. Ainsi, les premières métadonnées de synchronisation peuvent être générées par un service ASR.

Dans un mode particulier de réalisation selon l'invention, la génération (étape E2) du texte à partir de la piste audio peut aussi comprendre une identification des locuteurs dont les voix sont enregistrées dans la piste audio; et une génération d'un index 608 des locuteurs identifiés. Ainsi, dans ce mode de réalisation, le dispositif 120 comprend un module (non illustré dans la figure 1) configuré pour identifier les locuteurs dont les voix sont enregistrées dans la piste audio et pour générer l'index 608 des locuteurs identifiés. Ce module peut être un module indépendant des autres modules du dispositif 120 ou, par exemple, intégré au module 106.

Le traitement du contenu média se termine par le stockage du texte généré et des premières métadonnées de synchronisation (texte et marqueurs temporels 620 dans la figure 6). Dans un autre mode de réalisation, l'index des locuteurs 608 et une copie 612 du contenu média sont également stockés. Dans un mode particulier de réalisation, le stockage est effectué par le module 110 du dispositif 120, qui stocke les données dans la base de données 118. Il est noté que le service peut se reposer sur le fournisseur de contenus d'origine, et ne garder en mémoire que l'emplacement d'origine du contenu média sans avoir à le ré-encoder puis à héberger la copie 612 de ce contenu dans la base de données 118.

Si le contenu comprend un contenu textuel (i.e., contenu textuel 606), le traitement comprend, dans une étape E4, une génération, à partir du contenu textuel, d'un fichier audio et de deuxièmes métadonnées de synchronisation associant chaque mot du contenu textuel à un marqueur temporel dans le fichier audio généré. Dans un mode particulier de réalisation, l'étape E4 est effectuée par le module 108 du dispositif 120 décrit ci-dessus.

Dans un mode particulier de réalisation, les deuxièmes métadonnées de synchronisation peuvent être dans le même format que celui indiqué dans le tableau 1.

Dans un mode particulier de réalisation selon l'invention, la génération du fichier audio à partir du contenu textuel (étape E4) comprend un lancement d'un traitement TTS (« Text To Speech ») sur le contenu texte. Le traitement TTS synthétise et marque chaque mot du contenu textuel d'un marqueur temporel. Ainsi, les deuxièmes métadonnées de synchronisation peuvent être générées par un service TTS.

Dans un mode particulier de réalisation, l'étape E4 est précédée d'une étape E3 qui comprend une extraction d'un texte du contenu textuel. Dans un mode particulier de réalisation, l'étape E3 est effectuée dans le cas d'un contenu textuel de format pdf ou d'un contenu comprenant du texte non convenable au traitement TTS (e.g., des métadonnées). Ainsi, la génération du fichier audio et des deuxièmes métadonnées de synchronisation s'effectue en fonction du texte extrait dans l'étape E3. Dans un mode particulier de réalisation, l'étape E4 est effectuée par un module du module 108 du dispositif 120, configuré pour extraire un texte du contenu textuel et pour générer le fichier audio et les deuxièmes métadonnées de synchronisation en fonction du texte extrait.

Dans un mode particulier de réalisation, l'étape E4 comprend un découpage du contenu textuel en plusieurs parties de texte; une génération de fichiers audio partiels, un fichier audio partiel étant généré à partir d'une partie de texte du contenu textuel; et une fusion de l'ensemble des fichiers audio partiels générés à partir de l'ensemble des parties de texte du contenu textuel pour générer le fichier audio. Ainsi, dans ce mode de réalisation, le module 108 du dispositif 120 comprend un module configuré pour découper un contenu textuel en plusieurs parties de texte; un module configuré pour générer un fichier audio partiel à partir d'une partie de texte du contenu textuel; et un module configuré pour fusionner l'ensemble des fichiers audio partiels pour générer ledit fichier audio.

Dans un mode particulier de réalisation selon l'invention, la génération du fichier audio comprend la synthèse de voix différentes (par exemple, pour mise en avant de différents types de texte (e.g., des commentaires), synthèse vocale d'un dialogue comprenant différent locuteurs avec pour chaque personnage la voix au genre - féminin/masculin - approprié, à l'âge, etc.). Ainsi, dans ce mode, la génération du fichier audio à partir du contenu textuel peut comprendre, dans une étape E5, une identification des locuteurs dont les voix sont enregistrées dans fichier audio; et une génération d'un index 608 des locuteurs identifiés. Ainsi, dans ce mode de réalisation, le module 108 du dispositif 120 comprend un module configuré pour identifier les locuteurs dont les voix sont enregistrées dans le fichier et pour générer l'index 608 des locuteurs identifiés. Ce mode de réalisation peut être utilisé dans les cas d'usages où la synthèse de voix différentes apporte un intérêt.

Le traitement du contenu texte se termine par le stockage du contenu textuel et des deuxièmes métadonnées de synchronisation (texte et marqueurs temporels 620 dans la figure 6). Dans un autre mode de réalisation, l'index des locuteurs 608 et le fichier audio généré (synthèse audio 610) sont également stockés. Dans un mode particulier de réalisation, le stockage est effectué par le module 110 du dispositif 120, qui stocke les données dans la base de données 118.

Dans un mode particulier de réalisation selon l'invention, le traitement du contenu peut aussi comprendre, dans une étape E6, une segmentation lexicale du texte généré ou du contenu textuel pour déterminer un ou plusieurs éléments parmi : un index de segments thématiques 614, un index de mots-clés 616 et un index des entités nommées 618. Dans ce mode de réalisation, le dispositif 120 comprend un ou plusieurs module (non illustré dans la figure 1), intégrés ou indépendants, configuré(s) pour effectuer cette segmentation lexicale.

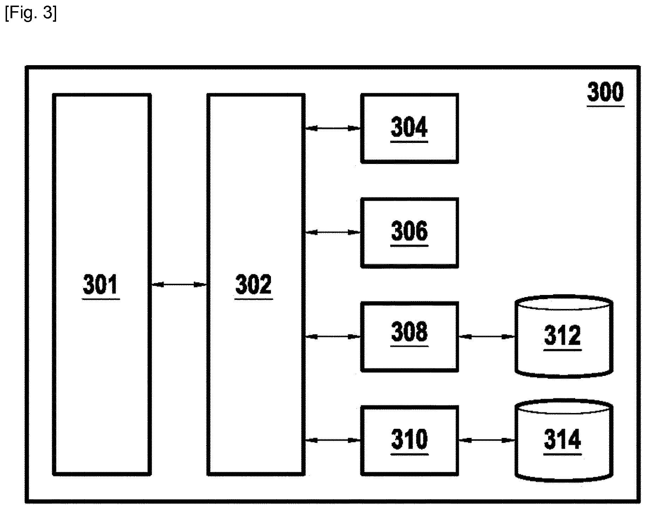

Dans un mode particulier de réalisation, la présente invention peut être mise en oeuvre dans le contexte d'un service web. Un exemple d'un système 300 selon un tel mode de réalisation est illustré à la **figure 3****.** Comme illustré à la figure 3, le système 300 comprend une interface utilisateur 301, un serveur back-end 302, un service TTS 304, un service ASR 306, un fournisseur de contenu textuel 308, un fournisseur de contenu média 310, un stockage de contenu textuel 312 et un stockage de contenu média 314.

Dans un mode de réalisation, le serveur back-end 302 est réalisé conformément au dispositif 120 décrit ci-dessus. Le service TTS 304 et le service ASR 306 peuvent être des services tiers extérieurs, ou être intégrés au sein du serveur back-end 302. Les fournisseurs 308 et 310 peuvent être des fournisseurs externes, accessibles publiquement, ou bien des fournisseurs internes associés au serveur back-end 302.

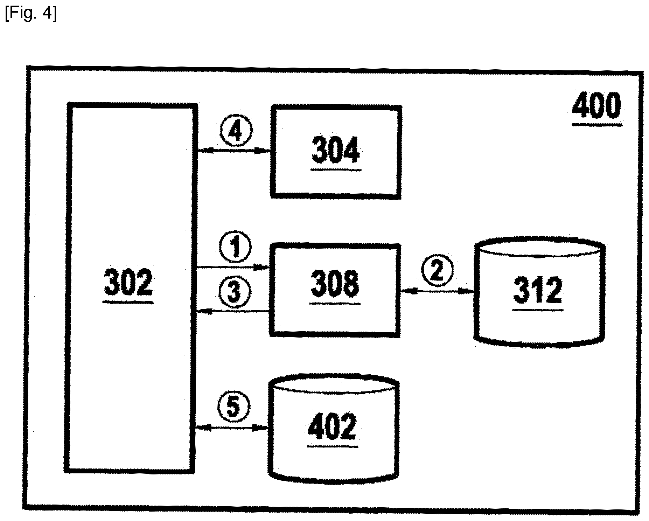

Dans un mode particulier de réalisation, un contenu textuel est traité comme indiqué sur la **figure 4****.** Notamment, le traitement commence par la connexion du serveur back-end 302 au fournisseur de contenu textuel 308, par exemple via une API (« Application Programming Interface ») du fournisseur de contenu 308, pour obtenir un contenu textuel. Ensuite, l'API du fournisseur de contenu 308 récupère le contenu textuel demandé du stockage de contenu textuel 312 et fournit le contenu récupéré au serveur back-end 302.

Le serveur back-end 302 peut prétraiter le contenu récupéré (par exemple, normalisation, traitement du langage naturel), puis lance le traitement TTS sur le contenu récupéré via une API du service TTS 304. Le service TTS 304 génère un fichier audio et les deuxièmes métadonnées de synchronisation, comme décrit ci-dessus, à partir du contenu textuel et renvoie le fichier audio et les deuxièmes métadonnées de synchronisation au serveur back-end 302. Selon la limite du traitement par l'API du service TTS 304, le serveur back-end 302 peut avoir à sa charge de découper le contenu textuel en plusieurs parties (e.g., des paragraphes) et de lancer le traitement TTS pour chaque partie séparément, avant de gérer la fusion des fichiers audio générés.

Le traitement se termine quand le serveur back-end 302 stocke le fichier audio et les deuxièmes métadonnées de synchronisation, ainsi que le contenu récupéré, dans une base de données 402.

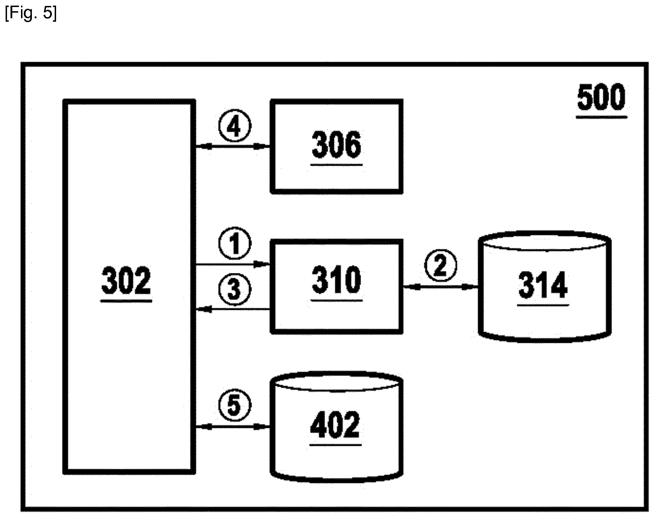

Le traitement d'un contenu média est effectué comme illustré dans la **figure 5** selon un mode de réalisation de l'invention. Notamment, le traitement commence par la connexion du serveur back-end 302 au fournisseur de contenu média 310, par exemple via une API du fournisseur de contenu 310, pour récupérer un contenu média. Ensuite, l'API du fournisseur de contenu 310 récupère le contenu média demandé du stockage de contenu média 314 et fournit le contenu récupéré au serveur back-end 302.

Le serveur back-end 302 extrait une piste audio du contenu dans le cas où le contenu récupéré inclut un contenu vidéo, un contenu audio constituant lui-même une piste audio. Puis, le serveur back-end 302 lance le traitement ASR sur la piste audio via une API du service ASR 306. Le service ASR 306 génère un texte et les premières métadonnées de synchronisation, comme décrit ci-dessus, à partir de la piste audio et renvoie le texte généré et les premières métadonnées de synchronisation au serveur back-end 302.

Le traitement se termine lorsque le serveur back-end 302 stocke la piste audio et les premières métadonnées de synchronisation, ainsi que le contenu récupéré, dans la base de données 402.

Comme décrit ci-dessus, selon un mode de réalisation de l'invention, la navigation spatio-temporelle de contenu est également rendue possible par le fait que le dispositif 120 fournit au client 116 le contenu demandé ainsi que les éléments nécessaires à la navigation spatio-temporelle, à savoir, des éléments permettant d'afficher tout type de contenu soit selon un mode de vue texte soit selon un mode de vue média dans l'interface utilisateur du client 116.

Notamment, dans un mode de réalisation, en réponse à une demande de contenu du client 116, le dispositif 120 transmet au client 116:
- le contenu demandé ;
- si le contenu demandé comprend un contenu média, le texte généré à partir de la piste audio extraite du contenu média et les premières métadonnées de synchronisation ;
- si le contenu demandé comprend un contenu textuel, le fichier audio généré à partir du contenu textuel et les deuxièmes métadonnées de synchronisation ; et
- un script, pour exécution au client 116, configuré pour :
   o afficher, dans l'interface utilisateur du client 116, un élément graphique pour permettre à un utilisateur du client 116 de sélectionner entre un mode de vue texte et un mode de vue média du contenu ; et
   o restituer le contenu et offrir, en fonction du statut de l'élément graphique, une navigation dudit contenu en mode de vue texte ou en mode de vue média en utilisant au moins un parmi : le texte généré, les premières métadonnées de synchronisation, le fichier audio, et les deuxièmes métadonnées de synchronisation.

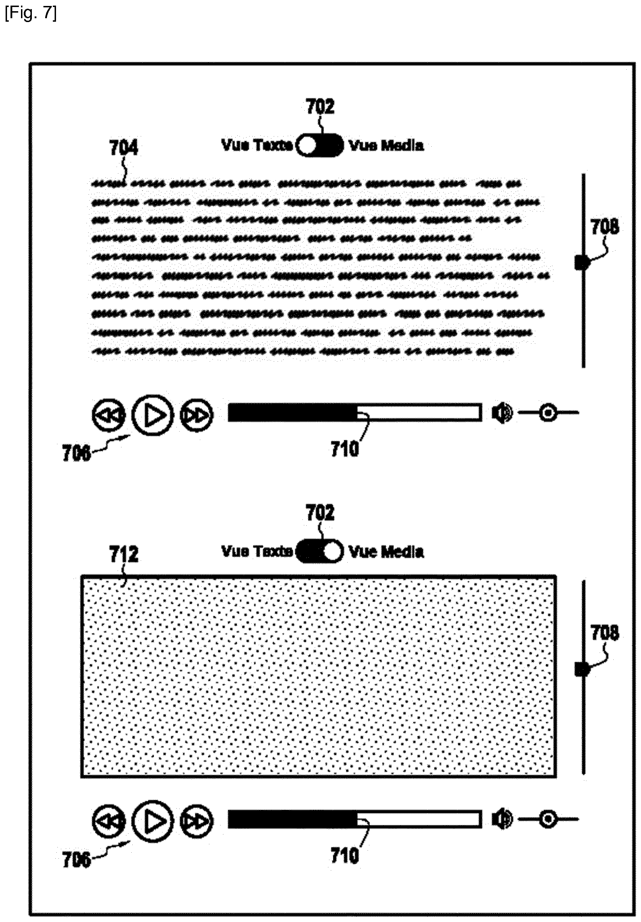

La **figure 7** illustre l'affichage d'un contenu (textuel ou média), à l'aide d'un script fourni par le dispositif 120, dans l'interface utilisateur du client 116. Comme illustré, l'affichage comprend l'affichage d'un élément graphique 702, à l'aide duquel un utilisateur peut choisir d'afficher le contenu soit en mode de vue texte soit en mode de vue média.

Dans un mode particulier de réalisation selon l'invention, en réponse à une sélection du mode de vue texte à l'aide de l'élément graphique 702, le script est configuré pour :
- si le contenu comprend un contenu média, déclencher un affichage d'un texte 704 généré à partir de la piste audio extraite du contenu média et d'une barre de progression 706 de la piste audio, et
- si le contenu comprend un contenu textuel, déclencher un affichage du contenu textuel 704 et d'une barre de progression 706 du fichier audio généré à partir du contenu textuel.

Dans un mode particulier de réalisation, quand le mode de vue texte est sélectionné et si le contenu comprend un contenu média, le script est configuré pour assurer une synchronisation entre le texte généré 704 et la barre de progression 706 de la piste audio. Notamment, à l'aide des premières métadonnées de synchronisation, le script est configuré pour:
- en réponse à un défilement du texte généré 704 via une barre de défilement verticale 708, déclencher un déplacement synchrone d'un indicateur de position de lecture courante 710 de la barre de progression 706 de la piste audio en fonction des premières métadonnées de synchronisation; et
- en réponse à un mouvement de l'indicateur de position de lecture courante 710 de la barre de progression de la piste audio, déclencher un défilement synchrone du texte généré 704 (et un déplacement correspondant du curseur de la barre de défilement verticale 708) en fonction des premières métadonnées de synchronisation.

Dans un autre mode de réalisation selon l'invention, le déplacement synchrone de l'indicateur de position de lecture courante 710 de la barre de progression de la piste audio ne se déclenche que lorsqu'au moins un mot du texte généré 704 est sélectionné par l'utilisateur. Dans ce même mode ou dans un autre mode de réalisation, le défilement synchrone du texte généré 704 ne se déclenche que lorsque l'utilisateur appuie sur un bouton de lecture de la barre de progression 706 de la piste audio.

Dans un mode particulier de réalisation, quand le mode de vue texte est sélectionné et si le contenu comprend un contenu textuel, le script est aussi configuré pour assurer une synchronisation entre le contenu textuel 704 et la barre de progression 706 du fichier audio généré à partir du contenu textuel. Notamment, à l'aide des deuxièmes métadonnées de synchronisation, le script est configuré pour:
- en réponse à un défilement du contenu textuel 704 via une barre de défilement verticale 708, déclencher un déplacement synchrone d'un indicateur de position de lecture 710 courante de la barre de progression du fichier audio en fonction des deuxièmes métadonnées de synchronisation; et
- en réponse à un mouvement de l'indicateur de position courante 710 de la barre de progression du fichier audio, déclencher un défilement synchrone du contenu textuel 704 (et un déplacement correspondant du curseur de la barre de défilement verticale 708) en fonction des deuxièmes métadonnées de synchronisation.

Dans un autre mode de réalisation selon l'invention, le déplacement synchrone de l'indicateur de position de lecture courante 710 de la barre de progression du fichier audio ne se déclenche que lorsqu'au moins un mot du contenu textuel 704 est sélectionné par l'utilisateur. Dans ce même mode ou dans un autre mode de réalisation, le défilement synchrone du contenu textuel 704 ne se déclenche que lorsque l'utilisateur appuie sur un bouton de lecture de la barre de progression 706 du fichier audio.

Dans un mode particulier de réalisation selon l'invention, en réponse à une sélection du mode de vue média à l'aide de l'élément graphique 702, le script est configuré pour :
- si le contenu comprend un contenu textuel, déclencher un affichage d'une barre de progression 706 du fichier audio généré à partir du contenu textuel; et
- si le contenu comprend un contenu média, déclencher un affichage d'une barre de progression 706 du contenu média (audio ou vidéo) et d'au moins une image 712 du contenu média (à savoir des images vidéo dans le cas où le contenu est un vidéo).

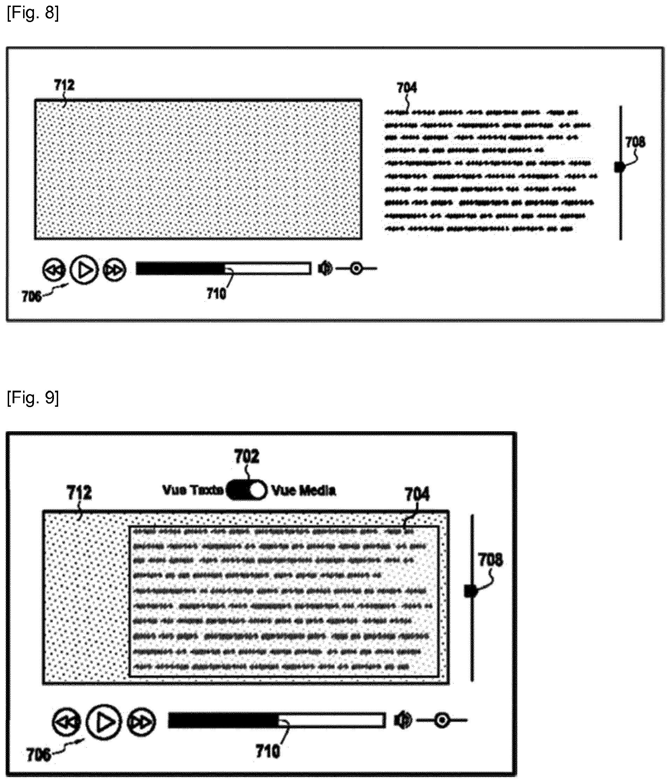

Dans un autre mode de réalisation, le script peut en outre être configuré pour fournir une représentation hybride de contenu qui comprend un affichage simultané de la vue de texte et de la vue média d'un contenu donné. Selon ce mode de réalisation, l'élément graphique 702 peut être modifié pour permettre à l'utilisateur de sélectionner cette troisième option. Différentes mises en oeuvre peuvent être envisagées pour cette représentation hybride. Par exemple, comme illustré à la **figure 8**, la vue texte et la vue média peuvent être affichées côte à côte. Dans une autre mise en oeuvre, comme illustré à la **figure 9**, la vue texte peut être superposée à la vue média avec un effet de transparence laissant entrevoir le média derrière le texte. Dans un mode particulier de réalisation, le script peut en outre être configuré pour permettre à l'utilisateur de choisir la vue pour la représentation hybride.

Conformément à la description ci-dessus, un contenu de tout type peut être affiché soit en mode de vue texte soit en mode de vue média, permettant ainsi de ramener tout type de contenu à une seule et même expérience utilisateur, à savoir une navigation spatio-temporelle pour tout type de contenu. Plus précisément, un contenu textuel (e.g., page html) peut avoir une navigation spatiale (via une barre de défilement verticale) mais aussi une navigation temporelle (via une barre de progression horizontale) grâce au fichier audio généré à partir du contenu. Et un contenu média (audio/vidéo) peut avoir une navigation temporelle (via une barre de progression horizontale) mais aussi une navigation spatiale via une barre de défilement verticale grâce au texte généré à partir du contenu.

## Revendications

1. Procédé pour permettre une navigation spatio-temporelle de contenu, comprenant:
- une récupération de contenus auprès d'un ou plusieurs fournisseurs de contenus, lesdits contenus comprenant un contenus média (602, 604) et/ou un contenus textuels (606),
- si le contenu récupéré est un contenu média, une extraction (E1) d'une piste audio du au moins un contenu média,
- une génération (E2), à partir de ladite piste audio, d'un texte et de premières métadonnées de synchronisation, associant chaque mot du texte généré à un marqueur temporel de ladite piste audio,
- si le contenu récupéré est un contenu textuel, une génération (E4), à partir du au moins un contenu textuel, d'un fichier audio et de deuxièmes métadonnées de synchronisation associant chaque mot dudit contenu textuel à un marqueur temporel dans le fichier audio généré,
- une réception d'une demande de contenu d'un client (116), le contenu comprenant un premier contenu d'un premier type (602, 604, 606); et
une transmission au client (116) :
- du premier contenu (602, 604, 606) ;
- d'un deuxième contenu d'un deuxième type (610, 620) généré (E2, E4) à partir du premier contenu (602, 604, 606) ;
- le premier type de contenu et le deuxième type de contenu étant des types de contenu distincts parmi un contenu textuel et un contenu média, et
- si le premier contenu comprend un contenu textuel (606), le deuxième contenu comprend ledit fichier audio (610) généré (E4) à partir du contenu textuel (606) et
- si le premier contenu comprend un contenu média (602, 604), le deuxième contenu comprend ledit texte (620) généré (E2) à partir de ladite piste audio extraite (E1) dudit contenu média (602, 604)
- les premières métadonnées de synchronisation (620) si ledit contenu récupéré est un contenu média ou les secondes métadonnées de synchronisation si ledit contenu récupéré est un contenu textuel; et
- un script, pour exécution au client (116), configuré pour
- afficher, dans une interface utilisateur du client, un élément graphique (702) pour permettre à un utilisateur de sélectionner entre les deux types de contenu ; et
- restituer au moins un des contenus en fonction du statut de l'élément graphique (702) et offrir
- une navigation dudit contenu et
- un affichage d'une première barre de progression de la navigation dans ledit contenu restitué et un affichage d'une seconde barre de progression d'une navigation dans ledit contenu non sélectionné synchronisée à ladite première barre de progression à l'aide des premières métadonnées de synchronisation ou des secondes métadonnées de synchronisation.

2. Procédé selon la revendication 1, dans lequel l'élément graphique permet à l'utilisateur de sélectionner entre un mode de vue texte et un mode de vue média du contenu, et dans lequel le script est configuré pour :
en réponse à une sélection du mode de vue texte par l'élément graphique (702),
- si le premier contenu comprend le contenu média (602, 604), déclencher un affichage du texte généré (704) et dudit indicateur de position d'une barre de progression (706) de la piste audio, le texte généré (704) et la barre de progression (706) de la piste audio étant synchronisés à l'aide des premières métadonnées de synchronisation (620); et
- si le premier contenu comprend le contenu textuel (606), déclencher un affichage du contenu textuel (704) et dudit indicateur de position d'une barre de progression (706) du fichier audio, le contenu textuel (704) et la barre de progression (706) du fichier audio étant synchronisés à l'aide des deuxièmes métadonnées de synchronisation (620).

3. Procédé selon la revendication 1 ou 2, dans lequel l'élément graphique permet à l'utilisateur de sélectionner entre un mode de vue texte et un mode de vue média du contenu.

4. Procédé selon l'une quelconque des revendications 2 ou 3, dans lequel quand le mode de vue texte est sélectionné et si le premier contenu comprend le contenu média (602, 604), le script est configuré pour:
en réponse à un défilement du texte généré (704), déclencher un déplacement synchrone dudit indicateur de position de lecture courante (710) de la barre de progression (706) de la piste audio en fonction des premières métadonnées de synchronisation (620); et
en réponse à un mouvement de l'indicateur de position de lecture courante (710) de la barre de progression de la piste audio, déclencher un défilement synchrone du texte généré (704) en fonction des premières métadonnées de synchronisation (620).

5. Procédé selon l'une quelconque des revendications 2 à 4, dans lequel quand le mode de vue texte est sélectionné et si le premier contenu comprend le contenu textuel, le script est configuré pour:
en réponse à un défilement du contenu textuel (704), déclencher un déplacement synchrone dudit indicateur de position de lecture courante (710) de la barre de progression (706) du fichier audio en fonction des deuxièmes métadonnées de synchronisation (620); et
en réponse à un mouvement de l'indicateur de position courante (710) de la barre de progression (706) du fichier audio, déclencher un défilement synchrone du contenu textuel (704) en fonction des deuxièmes métadonnées de synchronisation (620).

6. Procédé selon l'une quelconque des revendications 1 à 5, comprenant:
un découpage du contenu textuel en plusieurs parties de texte;
une génération de fichiers audio partiels, un fichier audio partiel étant généré à partir d'une partie de texte du contenu textuel; et
une fusion de l'ensemble des fichiers audio partiels générés à partir de l'ensemble des parties de texte du contenu textuel pour générer ledit fichier audio.

7. Procédé selon l'une quelconque des revendications 1 à 6, comprenant:
une segmentation lexicale (E6) du texte généré ou du contenu textuel pour déterminer un ou plusieurs éléments parmi : un index de segments thématiques (614), un index de mots-clés (616) et un index des entités nommées (618).

8. Programme d'ordinateur (PROG 208) comportant des instructions pour l'exécution des étapes du procédé selon l'une quelconque des revendications 1 à 7 lorsque ledit programme est exécuté par un ordinateur.

9. Support d'enregistrement (208) lisible par un ordinateur sur lequel est enregistré un programme d'ordinateur conforme à la revendication 8.

10. Dispositif (120) permettant une navigation spatio-temporelle de contenu, comprenant:
- un septième module (102) configuré pour récupérer un ou plusieurs contenus auprès d'un ou plusieurs fournisseurs de contenus, lesdits contenus comprenant un contenu média (602, 604) et/ou un contenu textuel (606),
- un troisième module (104) configuré pour extraire une piste audio du au moins un contenu média si le contenu récupéré est un contenu média,
- un quatrième module (106) configuré pour générer, à partir de ladite piste audio, un texte et des premières métadonnées de synchronisation, associant chaque mot du texte généré à un marqueur temporel de ladite piste audio,
- un cinquième module (108) configuré pour générer, à partir du au moins un contenu textuel si l'un au moins des contenus récupérés est un contenu textuel, un fichier audio et des deuxièmes métadonnées de synchronisation associant chaque mot dudit contenu textuel à un marqueur temporel dans le fichier audio généré, un premier module (112) configuré pour recevoir une demande de contenu d'un client (116), le contenu comprenant un premier contenu d'un premier type (602, 604, 606); et
un deuxième module (114) configuré pour transmettre au client :
- le premier contenu (602, 604, 606) ;
- un deuxième contenu d'un deuxième type (610, 620) généré (E2, E4) à partir du premier contenu (602, 604, 606) ;
- le premier type de contenu et le deuxième type de contenu étant des types de contenu distincts parmi un contenu textuel et un contenu média, et
- si le premier contenu comprend un contenu textuel (606), le deuxième contenu comprend ledit fichier audio (610) généré (E4) à partir du contenu textuel (606) et
- si le premier contenu comprend un contenu média (602, 604), le deuxième contenu comprend ledit texte (620) généré (E2) à partir de ladite piste audio extraite (E1) dudit contenu média (602, 604)
- les premières métadonnées de synchronisation (620) si ledit contenu récupéré est un contenu média ou les secondes métadonnées de synchronisation si le contenu récupéré est un contenu textuel et
- un script, pour exécution au client (116), configuré pour
- afficher, dans une interface utilisateur du client, un élément graphique (702) pour permettre à un utilisateur de sélectionner entre les deux types de contenu ; et
- restituer au moins un des contenus en fonction du statut de l'élément graphique (702) et offrir
- une navigation dudit contenu et
- un affichage d'une première barre de progression de la navigation dans ledit contenu restitué et un affichage d'une seconde barre de progression d'une navigation dans ledit contenu non sélectionné synchronisée à ladite première barre de progression à l'aide des premières métadonnées de synchronisation ou des secondes métadonnées de synchronisation.

## Patentansprüche

1. Verfahren, um eine räumlich-zeitliche Navigation von Inhalt zu ermöglichen, umfassend:
- ein Abrufen von Inhalten bei einem oder mehreren Inhalteanbietern, wobei die Inhalte einen Medieninhalt (602, 604) und/oder einen Textinhalt (606) umfassen,
- wenn der abgerufene Inhalt ein Medieninhalt ist, ein Extrahieren (E1) einer Audiospur des mindestens einen Medieninhalts,
- ein Erzeugen (E2), ausgehend von der Audiospur, eines Textes und von ersten Synchronisationsmetadaten, wobei jedes Wort des erzeugten Texts einem zeitlichen Marker der Audiospur zugeordnet wird,
- wenn der abgerufene Inhalt ein Textinhalt ist, ein Erzeugen (E4), ausgehend von dem mindestens einen Textinhalt, einer Audiodatei und von zweiten Synchronisationsmetadaten, wobei jedes Wort des Textinhalts einem zeitlichen Marker in der erzeugten Audiodatei zugeordnet wird,
- ein Empfangen einer Inhaltsanforderung eines Clients (116), wobei der Inhalt einen ersten Inhalt eines ersten Typs (602, 604, 606) umfasst; und ein Übertragen an den Client (116):
- des ersten Inhalts (602, 604, 606);
- eines zweiten Inhalts eines zweiten Typs (610, 620), der ausgehend von dem ersten Inhalt (602, 604, 606) erzeugt wurde (E2, E4);
- wobei der erste Inhaltstyp und der zweite Inhaltstyp verschiedene Inhaltstypen unter einem Textinhalt und einem Medieninhalt sind und
- wenn der erste Inhalt einen Textinhalt (606) umfasst, der zweite Inhalt die Audiodatei (610) umfasst, die ausgehend von dem Textinhalt (606) erzeugt wurde (E4), und
- wenn der erste Inhalt einen Medieninhalt (602, 604) umfasst, der zweite Inhalt den Text (620) umfasst, der ausgehend von der Audiospur erzeugt wurde (E2), die aus dem Medieninhalt (602, 604) extrahiert wurde (E1),
- die ersten Synchronisationsmetadaten (620), wenn der abgerufene Inhalt ein Medieninhalt ist, oder die zweiten Synchronisationsmetadaten, wenn der abgerufene Inhalt ein Textinhalt ist; und
- ein Skript, zur Ausführung an dem Client (116), das dazu ausgestaltet ist, um
- in einer Benutzeroberfläche des Clients ein grafisches Element (702) anzuzeigen, um es einem Benutzer zu ermöglichen, zwischen den beiden Inhaltsarten zu wählen; und
- mindestens einen der Inhalte in Abhängigkeit von dem Status des grafischen Elements (702) wiederzugeben und zu bieten
- eine Navigation des Inhalts und
- eine Anzeige eines ersten Fortschrittsbalkens der Navigation in dem wiedergegebenen Inhalt und eine Anzeige eines zweiten Fortschrittsbalkens einer Navigation in dem nicht gewählten Inhalt, der auf den ersten Fortschrittsbalken mithilfe der ersten Synchronisationsmetadaten oder der zweiten Synchronisationsmetadaten synchronisiert ist.

2. Verfahren nach Anspruch 1, bei dem das grafische Element es dem Benutzer ermöglicht, zwischen einem Textansichtsmodus und einem Medienansichtsmodus des Inhalts zu wählen, und bei dem das Skript dazu ausgestaltet ist, um:
als Antwort auf eine Auswahl des Textansichtsmodus durch das grafische Element (702),
- wenn der erste Inhalt den Medieninhalt (602, 604) umfasst, eine Anzeige des erzeugten Textes (704) und des Positionsanzeigers eines Fortschrittsbalkens (706) der Audiospur auszulösen, wobei der erzeugte Text (704) und der Fortschrittsbalken (706) der Audiospur mithilfe der ersten Synchronisationsmetadaten (620) synchronisiert werden; und
- wenn der erste Inhalt den Textinhalt (606) umfasst, eine Anzeige des Textinhalts (704) und des Positionsanzeigers eines Fortschrittsbalkens (706) der Audiodatei auszulösen, wobei der Textinhalt (704) und der Fortschrittsbalken (706) der Audiodatei mithilfe der zweiten Synchronisationsmetadaten (620) synchronisiert werden.

3. Verfahren nach Anspruch 1 oder 2, bei dem das grafische Element es dem Benutzer ermöglicht, zwischen einem Textansichtsmodus und einem Medienansichtsmodus des Inhalts zu wählen.

4. Verfahren nach einem der Ansprüche 2 oder 3, bei dem, wenn der Textansichtsmodus gewählt ist und wenn der erste Inhalt den Medieninhalt (602, 604) umfasst, das Skript dazu ausgestaltet ist, um:
als Antwort auf ein Durchlaufen des erzeugten Textes (704) eine synchrone Verlagerung eines Anzeigers der aktuellen Leseposition (710) des Fortschrittsbalkens (706) der Audiospur in Abhängigkeit von den ersten Synchronisationsmetadaten (620) auszulösen; und
als Antwort auf eine Bewegung des Anzeigers der aktuellen Leseposition (710) des Fortschrittsbalkens der Audiospur ein synchrones Durchlaufen des erzeugten Texts (704) in Abhängigkeit von den ersten Synchronisationsmetadaten (620) auszulösen.

5. Verfahren nach einem der Ansprüche 2 bis 4, bei dem, wenn der Textansichtsmodus gewählt ist und wenn der erste Inhalt den Textinhalt umfasst, das Skript dazu ausgestaltet ist, um:
als Antwort auf ein Durchlaufen des Textinhalts (704) eine synchrone Verlagerung des Anzeigers der aktuellen Leseposition (710) des Fortschrittsbalkens (706) der Audiodatei in Abhängigkeit von den zweiten Synchronisationsmetadaten (620) auszulösen; und
als Antwort auf eine Bewegung des Anzeigers der aktuellen Position (710) des Fortschrittsbalkens (706) der Audiodatei ein synchrones Durchlaufen des Textinhalts (704) in Abhängigkeit von den zweiten Synchronisationsmetadaten (620) auszulösen.

6. Verfahren nach einem der Ansprüche 1 bis 5, umfassend:
ein Unterteilen des Textinhalts in mehrere Textteile;
ein Erzeugen von partiellen Audiodateien, wobei eine partielle Audiodatei ausgehend von einem Textteil des Textinhalts erzeugt wird; und
ein Zusammenführen der Gesamtheit der partiellen Audiodateien, die ausgehend von der Gesamtheit der Textteile des Textinhalts erzeugt wurden, um die Audiodatei zu erzeugen.

7. Verfahren nach einem der Ansprüche 1 bis 6, umfassend:
ein lexikalisches Segmentieren (E6) des erzeugten Textes oder des Textinhalts, um ein oder mehrere Elemente zu bestimmen unter: einem Verzeichnis thematischer Segmente (614), einem Stichwortverzeichnis (616) und einem Verzeichnis der benannten Einheiten (618) .

8. Computerprogramm (PROG 208), das Anweisungen enthält, die bei der Ausführung des Programms durch einen Computer das Verfahren nach einem der Ansprüche 1 bis 7 ausführen.

9. Computerlesbares Speichermedium (208), auf dem ein Computerprogramm nach Anspruch 8 gespeichert ist.

10. Vorrichtung (120), die eine räumlich-zeitliche Navigation von Inhalt ermöglicht, umfassend:
- ein siebtes Modul (102), das dazu ausgestaltet ist, einen oder mehrere Inhalte bei einem oder mehreren Inhalteanbietern abzurufen, wobei die Inhalte einen Medieninhalt (602, 604) und/oder einen Textinhalt (606) umfassen,
- ein drittes Modul (104), das dazu ausgestaltet ist, eine Audiospur des mindestens einen Medieninhalts zu extrahieren, wenn der abgerufene Inhalt ein Medieninhalt ist,
- ein viertes Modul (106), das dazu ausgestaltet ist, ausgehend von der Audiospur einen Text und erste Synchronisationsmetadaten zu erzeugen, wobei jedes Wort des erzeugten Textes einem zeitlichen Marker der Audiospur zugeordnet wird,
- ein fünftes Modul (108), das dazu ausgestaltet ist, ausgehend von dem mindestens einen Textinhalt, wenn der mindestens eine der abgerufenen Inhalte ein Textinhalt ist, eine Audiodatei und zweite Synchronisationsmetadaten zu erzeugen, wobei jedes Wort des Textinhalts einem zeitlichen Marker in der erzeugten Audiodatei zugeordnet wird, ein erstes Modul (112), das dazu ausgestaltet ist, eine Inhaltsanforderung eines Clients (116) zu empfangen, wobei der Inhalt einen ersten Inhalt eines ersten Typs (602, 604, 606) umfasst; und
ein zweites Modul (114), das dazu ausgestaltet ist, an den Client zu übertragen:
- den ersten Inhalt (602, 604, 606);
- einen zweiten Inhalt eines zweiten Typs (610, 620), der ausgehend von dem ersten Inhalt (602, 604, 606) erzeugt wurde (E2, E4);
- wobei der erste Inhaltstyp und der zweite Inhaltstyp verschiedene Inhaltstypen unter einem Textinhalt und einem Medieninhalt sind und
- wenn der erste Inhalt einen Textinhalt (606) umfasst, der zweite Inhalt die Audiodatei (610) umfasst, die ausgehend von dem Textinhalt (606) erzeugt wurde (E4), und
- wenn der erste Inhalt einen Medieninhalt (602, 604) umfasst, der zweite Inhalt den Text (620) umfasst, der ausgehend von der Audiospur erzeugt wurde (E2), die aus dem Medieninhalt (602, 604) extrahiert wurde (E1),
- die ersten Synchronisationsmetadaten (620), wenn der abgerufene Inhalt ein Medieninhalt ist, oder die zweiten Synchronisationsmetadaten, wenn der abgerufene Inhalt ein Textinhalt ist, und
- ein Skript, zur Ausführung an dem Client (116), das dazu ausgestaltet ist, um
- in einer Benutzeroberfläche des Clients ein grafisches Element (702) anzuzeigen, um es einem Benutzer zu ermöglichen, zwischen den beiden Inhaltsarten zu wählen; und
- mindestens einen der Inhalte in Abhängigkeit von dem Status des grafischen Elements (702) wiederzugeben und zu bieten
- eine Navigation des Inhalts und
- eine Anzeige eines ersten Fortschrittsbalkens der Navigation in dem wiedergegebenen Inhalt und eine Anzeige eines zweiten Fortschrittsbalkens einer Navigation in dem nicht gewählten Inhalt, der auf den ersten Fortschrittsbalken mithilfe der ersten Synchronisationsmetadaten oder der zweiten Synchronisationsmetadaten synchronisiert ist.

## Claims

1. Method for enabling spatiotemporal content navigation, comprising:
- retrieving content items from one or more content providers, said content items comprising a media content item (602, 604) and/or a text content item (606),
- if the retrieved content item is a media content item, extracting (E1) an audio track from the at least one media content item,
- generating (E2), from said audio track, a text and first synchronization metadata associating each word of the generated text with a time marker of said audio track,
- if the retrieved content item is a text content item, generating (E4), from the at least one text content item, an audio file and second synchronization metadata associating each word of said text content item with a time marker in the generated audio file,
- receiving a content request from a client (116), the content item comprising a first content item of a first type (602, 604, 606); and transmitting, to the client (116):
- the first content item (602, 604, 606);
- a second content item of a second type (610, 620) generated (E2, E4) from the first content item (602, 604, 606);
- the first type of content item and the second type of content item being different types of content item from among a text content item and a media content item, and
- if the first content item comprises a text content item (606), the second content item comprises said audio file (610) generated (E4) from the text content item (606) and
- if the first content item comprises a media content item (602, 604), the second content item comprises said text (620) generated (E2) from said audio track extracted (E1) from said media content item (602, 604)
- the first synchronization metadata (620) if said retrieved content item is a media content item or the second synchronization metadata if said retrieved content item is a text content item; and
- a script, for execution at the client (116), configured to
- display, in a user interface of the client, a graphical element (702) for allowing a user to select between the two types of content item; and
- render at least one of the content items depending on the status of the graphical element (702) and offer
- navigation of said content item and
- a display of a first progress bar with regard to the navigation in said rendered content item and a display of a second progress bar with regard to navigation in said non-selected content item, synchronized with said first progress bar using the first synchronization metadata or the second synchronization metadata.

2. Method according to Claim 1, wherein the graphical element allows the user to select between a text-viewing mode and a media-viewing mode for the content item, and wherein the script is configured to:
in response to selection of the text-viewing mode via the graphical element (702),
- if the first content item comprises the media content item (602, 604), trigger a display of the generated text (704) and of said position indicator of a progress bar (706) of the audio track, the generated text (704) and the progress bar (706) of the audio track being synchronized using the first synchronization metadata (620); and
- if the first content item comprises the text content item (606), trigger a display of the text content item (704) and of said position indicator of a progress bar (706) of the audio file, the text content item (704) and the progress bar (706) of the audio file being synchronized using the second synchronization metadata (620).

3. Method according to Claim 1 or 2, wherein the graphical element allows the user to select between a text-viewing mode and a media-viewing mode for the content item.

4. Method according to either one of Claims 2 and 3, wherein, when the text-viewing mode is selected and if the first content item comprises the media content item (602, 604), the script is configured to: in response to scrolling of the generated text (704), trigger a synchronous movement of said current playback position indicator (710) of the progress bar (706) of the audio track on the basis of the first synchronization metadata (620); and
in response to a movement of the current playback position indicator (710) of the progress bar of the audio track, trigger synchronous scrolling of the generated text (704) on the basis of the first synchronization metadata (620).

5. Method according to any one of Claims 2 to 4, wherein, when the text-viewing mode is selected and if the first content item comprises the text content item, the script is configured to:
in response to scrolling of the text content item (704), trigger a synchronous movement of said current playback position indicator (710) of the progress bar (706) of the audio file on the basis of the second synchronization metadata (620); and
in response to a movement of the current position indicator (710) of the progress bar (706) of the audio file, trigger synchronous scrolling of the text content item (704) on the basis of the second synchronization metadata (620).

6. Method according to any one of Claims 1 to 5, comprising:
dividing the text content item into multiple portions of text;
generating partial audio files, a partial audio file being generated from a portion of text of the text content item; and
fusing all of the partial audio files generated from all of the portions of text of the text content item so as to generate said audio file.

7. Method according to any one of Claims 1 to 6, comprising:
carrying out lexical segmentation (E6) of the generated text or of the text content item so as to determine one or more elements from among: a thematic segment index (614), a keyword index (616) and a named entity index (618) .

8. Computer program (PROG 208) comprising instructions for executing the steps of the method according to any one of Claims 1 to 7 when said program is executed by a computer.

9. Recording medium (208) able to be read by a computer and on which there is recorded a computer program according to Claim 8.

10. Device (120) enabling spatiotemporal content navigation, comprising:
- a seventh module (102) configured to retrieve one or more content items from one or more content providers, said content items comprising a media content item (602, 604) and/or a text content item (606), - a third module (104) configured to extract an audio track from the at least one media content item if the retrieved content item is a media content item,
- a fourth module (106) configured to generate, from said audio track, a text and first synchronization metadata associating each word of the generated text with a time marker of said audio track,
- a fifth module (108) configured to generate, from the at least one text content item if at least one the retrieved content items is a text content item, an audio file and second synchronization metadata associating each word of said text content item with a time marker in the generated audio file, a first module (112) configured to receive a content request from a client (116), the content item comprising a first content item of a first type (602, 604, 606); and
a second module (114) configured to transmit, to the client:
- the first content item (602, 604, 606);
- a second content item of a second type (610, 620) generated (E2, E4) from the first content item (602, 604, 606);
- the first type of content item and the second type of content item being different types of content item from among a text content item and a media content item, and
- if the first content item comprises a text content item (606), the second content item comprises said audio file (610) generated (E4) from the text content item (606) and
- if the first content item comprises a media content item (602, 604), the second content item comprises said text (620) generated (E2) from said audio track extracted (E1) from said media content item (602, 604)
- the first synchronization metadata (620) if said retrieved content item is a media content item or the second synchronization metadata if the retrieved content item is a text content item; and
- a script, for execution at the client (116), configured to
- display, in a user interface of the client, a graphical element (702) for allowing a user to select between the two types of content item; and
- render at least one of the content items depending on the status of the graphical element (702) and offer
- navigation of said content item and
- a display of a first progress bar with regard to the navigation in said rendered content item and a display of a second progress bar with regard to navigation in said non-selected content item, synchronized with said first progress bar using the first synchronization metadata or the second synchronization metadata.
